# DEMANDE DE BREVET EUROPEEN

(11) **EP 1 221 644 A1**
(43) Date de publication de la demande: **10.07.2002**
(21) Numéro de dépôt: 01460071.2
(22) Date de dépôt: 21.11.2001
(51) Int. Cl.: G05D 23/19

(54) **Installation de commande d'une unité de chauffage, telle qu'une chaudière**

(30) Priorité: 22.11.2000 FR 0015047
(71) Demandeur: DELTA DORE Société Anonyme, F-35270 Combourg (FR)
(72) Inventeur: Raffray, Patrick, 35120 Hirel (FR)
(74) Mandataire: Maillet, Alain

(57) **Abrégé**

La présente invention concerne une installation de commande d'une unité de chauffage, telle qu'une chaudière (10), du type comportant une unité de commande (20, 20a) destinée à commander la chaudière (10) en fonction d'au moins un paramètre de fonctionnement et d'une valeur de température ambiante.

Cette installation est caractérisée en ce qu'elle comporte une interface téléphonique (25) reliée à une ligne téléphonique L et, d'une part, à un synthétiseur vocal (27) prévu pour émettre au moins un message vocal explicite à destination du terminal d'abonné (30), ledit message indiquant à l'utilisateur du terminal d'abonné (30) la température ambiante du moment et/ou au moins un paramètre de fonctionnement, et, d'autre part, à un décodeur (26) prévu pour recevoir les signaux émis sur la ligne téléphonique par un terminal (30) puis les décoder, lesdits signaux émis correspondant à au moins une nouvelle valeur de paramètre de fonctionnement à prendre en compte par ladite installation.

## Description

La présente invention concerne une installation de commande d'une unité de chauffage, telle qu'une chaudière.

Généralement, les installations de commande d'une unité de chauffage, telle qu'une chaudière, qui sont connues sont du type comportant une unité de commande destinée à commander ladite unité en fonction d'au moins un paramètre de fonctionnement, généralement une température de consigne ou un ensemble de températures de consigne s'appliquant à des périodes de temps différentes, et en fonction d'une valeur de température ambiante. L'unité de chauffage assure donc le chauffage des locaux dans lesquels elle est installée en cherchant à égaler la température ambiante à la valeur de consigne du moment.

Le problème que pose ce type d'installation de commande est le suivant. Lorsque l'utilisateur n'est pas dans les locaux de l'installation, il positionne la température de consigne à une valeur faible de manière à assurer une économie d'énergie substantielle. Il n'arrête cependant pas son installation de chauffage de manière à assurer un fonctionnement hors-gel.

Cette manière de procéder à l'inconvénient que lorsqu'il réintègre ces locaux, l'utilisateur doit séjourner généralement quelques heures dans un froid peut agréable en attendant que la température ambiante de ses locaux remonte à des valeurs plus clémentes.

Le but de la présente invention est de proposer une installation de commande d'une unité de chauffage, telle qu'une chaudière, qui permette de résoudre ce problème en donnant à l'utilisateur d'une telle installation des moyens pour qu'il puisse réintégrer des locaux préalablement chauffés s'il le désire.

A cet effet, une installation de commande selon la présente invention comporte une interface téléphonique reliée à une ligne téléphonique et, d'une part, à un synthétiseur vocal prévu pour émettre au moins un message vocal explicite à destination du terminal d'abonné, ledit message indiquant à l'utilisateur du terminal d'abonné la température ambiante du moment et/ou au moins un paramètre de fonctionnement, et, d'autre part, à un décodeur prévu pour recevoir les signaux émis sur la ligne téléphonique par un terminal puis les décoder, lesdits signaux émis correspondant à au moins une nouvelle valeur de paramètre de fonctionnement à prendre en compte par ladite installation.

Selon une autre caractéristique de la présente invention, ladite nouvelle valeur de paramètre de fonctionnement transmise par l'utilisateur est stockée dans des moyens de paramétrage que comporte ladite unité de commande.

Selon une autre caractéristique de l'invention, l'interface, le décodeur et le synthétiseur vocal sont inclus dans une même unité d'interfaçage, l'unité de commande et l'unité d'interfaçage communiquant entre elles aux moyens d'émetteurs-récepteurs qu'elles comportent respectivement.

Selon une variante de réalisation de la présente invention, ladite nouvelle valeur de paramètre de fonctionnement transmise par l'utilisateur est la température de consigne du moment et est transmise au moyen d'un émetteur au récepteur de la chaudière qui la prend alors en tant que valeur de consigne pour son fonctionnement.

Selon une autre caractéristique de l'invention, l'interface, le décodeur, le synthétiseur vocal et l'émetteur sont inclus dans une même unité d'interfaçage.

Selon une autre caractéristique de l'invention, l'interface met en oeuvre un protocole de prise de la ligne consistant à ne prendre la ligne que lorsque, sur la ligne téléphonique, un signal de sonnerie apparaît plus d'un nombre prédéterminé de fois.

Selon une autre caractéristique de l'invention, l'interface met en oeuvre un protocole de prise de la ligne consistant à ne prendre la ligne que lorsque le signal de sonnerie est d'abord reçu un nombre prédéterminé de fois puis, après un laps de temps, de nouveau un nombre prédéterminé de fois.

Selon une autre caractéristique de l'invention, elle met en oeuvre un protocole d'identification de l'utilisateur appelant, ledit protocole consistant à commander le synthétiseur vocal de manière qu'il émette un premier message qui sera transmis au terminal d'abonné de l'utilisateur appelant, ledit premier message demande à l'utilisateur d'introduire à l'aide du clavier de son terminal d'abonné un code utilisateur, et à valider le code entré par l'utilisateur uniquement s'il est valide sinon à raccrocher la ligne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma synoptique d'une installation de commande d'une unité de chauffage selon un premier mode de réalisation de la présente invention,
La Fig. 2 est un schéma synoptique d'une installation de commande d'une unité de chauffage selon un second mode de réalisation de la présente invention et,
La Fig. 3 est un schéma synoptique d'une installation de commande d'une unité de chauffage selon un troisième mode de réalisation de la présente invention.

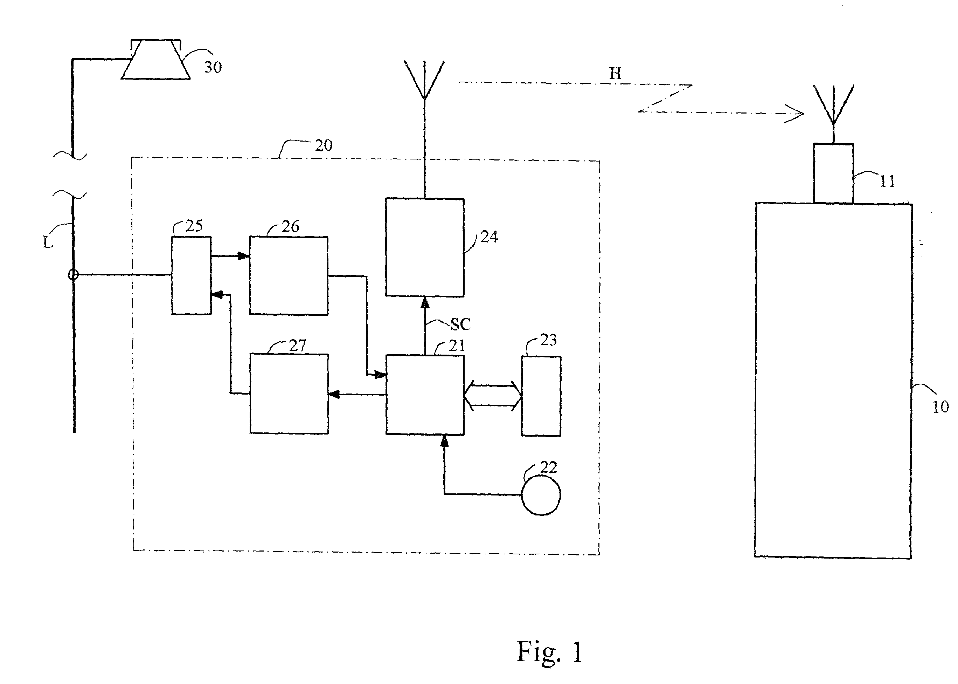

L'installation de commande d'une unité de chauffage, particulièrement une chaudière 10, telle que représentée à la Fig. 1 comprend essentiellement une unité de commande 20 destinée à commander la chaudière 10, par exemple par l'intermédiaire d'une liaison filaire ou, comme c'est le cas dans le mode de réalisation représenté, par l'intermédiaire d'une liaison hertzienne H.

L'unité de commande 20 comporte une unité de pilotage 21 qui reçoit les signaux d'une sonde de température 22 (interne comme c'est le cas ici ou externe à l'unité 20) et de moyens de paramétrage 23 permettant d'établir des paramètres, tels qu'une ou plusieurs températures de consigne, des plages horaires de fonctionnement, des modes de fonctionnement (modes "confort", "économique", "hors-gel", "arrêt", ...) etc.

L'utilisateur peut être amené à programmer les moyens de paramétrage 23, par exemple pour déterminer les heures de commencement et de fin des plages horaires, des modes de fonctionnement (mode "confort", mode "économique", mode "hors-gel", ...) auxquels sont respectivement associées des températures de consigne et des plages horaires ainsi que des températures de consigne associées à ces modes de fonctionnement. L'ensemble de ces valeurs constitue des paramètres de réglage des moyens de paramétrage 23.

En fonction des signaux fournis par la sonde 22 et par les moyens de paramétrage 23, l'unité de pilotage 21 délivre un signal de commande SC à un émetteur 24 prévu pour le transmettre à un récepteur 11 situé à proximité de la chaudière 10 et prévu pour contrôler son mode de fonctionnement. Par exemple, selon un mode de réalisation de la présente invention conforme à la Fig. 1, le signal de commande SC est un signal de type marche/arrêt. Mais, on comprendra qu'il pourrait être plus complexe et, par exemple, contenir les valeurs de température ambiante et de température de consigne du moment.

Le fonctionnement de l'ensemble décrit jusqu'ici est maintenant explicité en considérant le cas simple où les moyens de paramétrage 23 n'établissent qu'une seule température de consigne et où le signal de commande SC est un signal du type marche/arrêt.

Lorsque la température qui est mesurée par la sonde 22 est inférieure à la température de consigne délivrée par les moyens de paramétrage 23, l'unité de pilotage 21 délivre un signal de commande SC de marche et qui est alors transmis, par l'émetteur 24, au récepteur 11 et à la chaudière 10 (de manière générale à l'unité de chauffage). La chaudière 10 est alors commandée de manière à chauffer les locaux dans lesquels ladite installation est présente. Inversement, lorsque la température mesurée par la sonde 22 est supérieure à la température de la consigne délivrée par les moyens 23, le signal de commande SC délivré par l'unité 21 est un signal d'arrêt, ce qui a pour effet de stopper le chauffage de la chaudière 10.

Dans des cas où plusieurs valeurs de température de consigne sont assignées à différentes plages horaires, le fonctionnement reste sensiblement le même mais il tient compte de la plage horaire du moment présent.

De manière à ce qu'elle puisse être elle-même commandée via le réseau téléphonique commuté par un terminal d'abonné 30, l'unité de commande 20 est reliée à une ligne téléphonique L. Comme on le comprendra par la suite, le terminal d'abonné 30 est avantageusement pourvu de moyens de numérotation DTMF (Dual Tone MultiFrequency).

L'unité de commande 20 comprend une interface téléphonique 25 qui est reliée à la ligne téléphonique L du local dans lequel se trouve l'installation. Elle est également reliée à l'entrée d'un décodeur de signaux codés 26 pour lui transmettre les signaux codés émis sur la ligne L par le terminal d'abonné 30. Ces signaux codés par le terminal d'abonné 30 sont par exemple sous le format DTMF. Elle est enfin reliée à la sortie d'un synthétiseur vocal 27 prévu pour recevoir les signaux vocaux générés par lui et pour les transmettre sur la ligne téléphonique L.

Le décodeur 26 est relié à une entrée de l'unité de pilotage 21 pour pouvoir y transmettre les signaux décodés. De même, le synthétiseur vocal 27 est relié à une sortie appropriée de l'unité de pilotage 21 pour y recevoir ses signaux de commande.

Le fonctionnement de l'ensemble constitué de l'interface 25, du décodeur 26 et du synthétiseur 27 est le suivant.

Lorsque, sur la ligne téléphonique L, un signal de sonnerie apparaît plus d'un nombre prédéterminé de fois (par exemple 10), l'interface 25 prend la ligne L. D'autres protocoles de prise de ligne peuvent être mis en oeuvre. Par exemple, la ligne L est prise lorsque le signal de sonnerie est d'abord reçu un nombre prédéterminé de fois (par exemple 3) puis, après un laps de temps, par exemple de l'ordre d'une trentaine de secondes, de nouveau un nombre prédéterminé de fois ( par exemple 3).

Lorsque la ligne L est prise, l'unité de commande 21 commande le synthétiseur vocal 27 de manière qu'il émette un premier message qui sera transmis au terminal d'abonné 30 de l'utilisateur par l'interface 25. Ce premier message demande à l'utilisateur d'introduire à l'aide du clavier de son terminal d'abonné 30 un code utilisateur CU. Une fois entré par l'utilisateur et reçu par l'interface 25, ce code est transmis au décodeur DTMF 26 qui le délivre décodé à l'unité de pilotage 21 pour un traitement de validation.

Ce traitement est le suivant. Si le code entré par l'utilisateur est incorrect, l'unité de pilotage 21 commande le synthétiseur vocal 27 pour qu'il ré-émette le premier message afin que l'utilisateur puisse entrer un code correct. Au bout d'un certain nombre de fois sans que le code correct soit entré, la ligne téléphonique est raccrochée.

Par contre, si ce code est correct, la valeur de température délivrée par la sonde 22 et, éventuellement les valeurs des paramètres délivrées par les moyens de paramétrage 23, sont transmises au synthétiseur vocal 27 lequel les traduit en signaux vocaux explicites transmis via l'interface 25 et la ligne L au terminal 30. Ces signaux vocaux sont alors entendus par l'utilisateur du terminal téléphonique 30.

Une autre fonction peut également être mise en oeuvre par l'unité de pilotage 21, par exemple à la demande de l'utilisateur par appui d'une touche appropriée sur son terminal d'abonné 30. Il s'agit de la fonction de modifications d'au moins un paramètre de fonctionnement stocké par les moyens de paramétrage 23. Il peut s'agir par exemple de la température de consigne. Dans le cas d'une unité de pilotage fonctionnant en plusieurs modes (mode "confort", mode "économique", mode "hors-gel", ...) à des plages horaires différentes, il peut s'agir de la température de consigne du moment.

Pour ce faire, l'unité de pilotage 21 commande le synthétiseur vocal 27 afin que celui-ci délivre un message donnant à l'utilisateur du terminal d'abonné 30 la valeur de consigne en cours. A ce moment, si l'utilisateur veut modifier cette valeur de consigne, il frappe cette nouvelle valeur sur son terminal d'abonné 30. Les signaux DTMF correspondants sont transmis via la ligne L et l'interface 25 au décodeur 26, puis les valeurs décodées sont transmises à l'unité de pilotage 21 qui commande alors les moyens de paramétrage 23 afin que soit mémorisée la nouvelle valeur de consigne. Une procédure peut être utilisée pour la validation de cette nouvelle valeur.

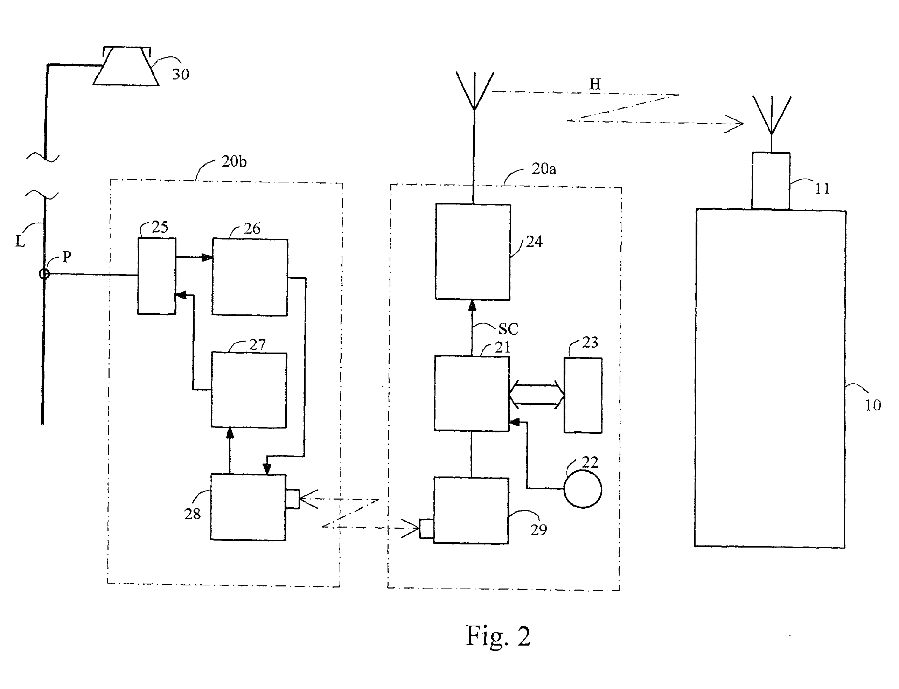

A la Fig. 2, on a représenté un autre mode de réalisation de l'installation de commande selon la présente invention dans laquelle l'unité de commande 20 est en réalité constituée d'une unité de commande proprement dite 20a et d'une unité d'interfaçage 20b. L'unité de commande 20a est placée dans le local qui sert de référence de température pour l'ensemble de l'installation de chauffage, alors que l'unité d'interfaçage 20b est placée à proximité d'une prise téléphonique P. L'unité de pilotage 20a et l'unité d'interfaçage 20b communiquent entre elles au moyen d'un émetteur-récepteur 28 que comprend l'unité d'interfaçage 20b, et d'un émetteur-récepteur 29 que comprend l'unité de commande 20a.

Le fonctionnement du mode de réalisation de la Fig. 2 diffère peu de celui de l'installation représentée à la Fig. 1. En effet, les signaux transmis de l'unité de pilotage 21 au décodeur DTMF 26, et ceux qui sont transmis du synthétiseur vocal 27 à l'unité de pilotage 21, le sont par l'intermédiaire maintenant des émetteurs-récepteurs 28 et 29.

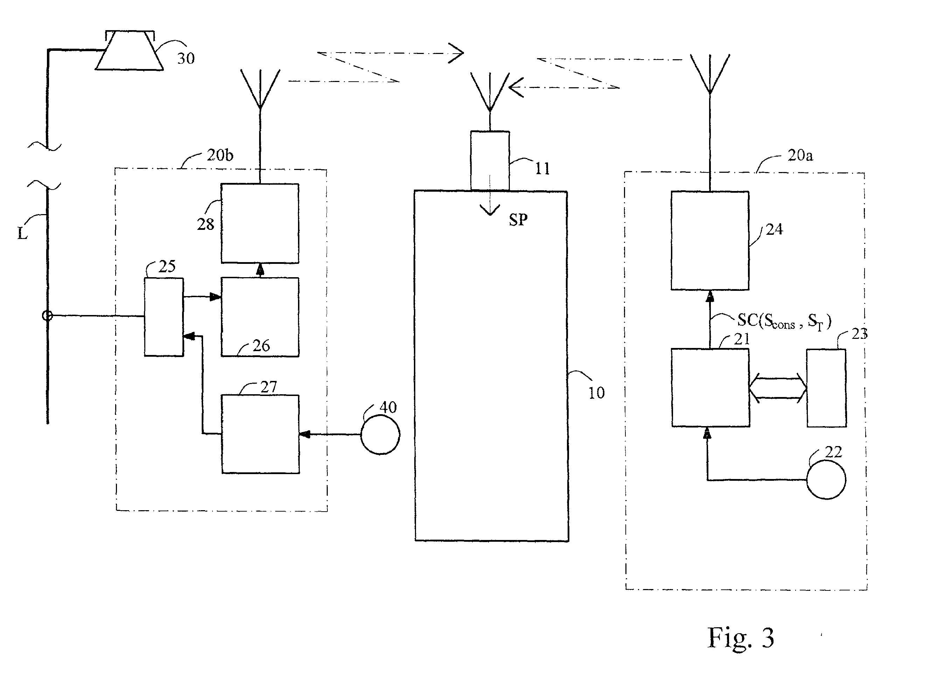

A la Fig. 3, on a représenté un nouveau mode de réalisation de l'installation de commande selon lequel l'unité de commande 20a est essentiellement constituée d'une unité de pilotage 21, d'une sonde 22, de moyens de paramétrage 23, et d'un émetteur 24. Dans ce mode de réalisation, comme on le comprendra par la suite, le signal de commande SC délivré par l'unité 21 et transmis au récepteur 11 par l'émetteur 24, comporte au moins, d'une part, le signal de consigne du moment et, d'autre part, la température ambiante telle que mesurée par la sonde 22. Sur la base de ce signal SC composé de ces deux signaux S_{cons} et S_{T}, le récepteur 11 élabore par exemple un signal de pilotage SP pour piloter le fonctionnement de la chaudière 10.

Quant à l'unité d'interfaçage 20b, elle comporte une interface téléphonique 25, un décodeur 26, un synthétiseur vocal 27, et un émetteur 28 qui est prévu pour transmettre une valeur de consigne au récepteur 11 situé à proximité de la chaudière 10.

Le synthétiseur vocal 27 reçoit les signaux d'une sonde de température 40 et transforme la valeur portée par ces signaux en un signal vocal explicite qui est délivré à l'interface téléphonique 25. Quant au décodeur 26, il reçoit des signaux codés par le terminal d'abonné 30 via la ligne L et l'interface 25. Les valeurs décodées sont transmises à l'émetteur 28, puis au récepteur 11 situé à proximité de la chaudière 10.

Le fonctionnement de ce mode de réalisation est le suivant. L'unité de commande 20a est un thermostat programmable classique qui transmet le signal de commande SC constitué de la valeur de consigne S_{cons} du moment ainsi que la température ambiante S_{T} mesurée par la sonde 40.

On notera qu'il pourrait s'agir, au lieu de la sonde 40, de la sonde 22 à condition que l'unité d'interfaçage 20b dispose de moyens pour communiquer la valeur délivrée par cette sonde 22 à l'unité de commande 20a.

En fonction de ces valeurs, le récepteur 11 élabore un signal de commande SC pour commander la chaudière 10.

L'utilisateur qui entre en communication avec l'unité d'interfaçage 20b reçoit d'abord un message lui indiquant la température ambiante de la pièce où se trouve la sonde 40. S'il désire modifier la valeur de consigne, il frappe la nouvelle valeur au moyen du clavier de son terminal d'abonné 30, qui émet alors des signaux DTMF correspondants, reçus par l'interface 25, puis décodés par le décodeur 26 et transmis au moyen de l'émetteur 28 au récepteur 11 de la chaudière 10.

Cette nouvelle valeur se substitue à celle qui a été précédemment transmise par l'unité de commande 20a, le récepteur 11 élaborant alors en fonction de cette valeur de consigne transmise par la ligne téléphonique L et la valeur de la température ambiante transmise par l'unité de commande 20a un nouveau signal de pilotage SP pour le pilotage du fonctionnement de la chaudière 10.

## Revendications

1. Installation de commande d'une unité de chauffage, telle qu'une chaudière (10), du type comportant une unité de commande (20, 20a) destinée à commander la chaudière (10) en fonction d'au moins un paramètre de fonctionnement et d'une valeur de température ambiante, **caractérisée en ce qu'**elle comporte une interface téléphonique (25) reliée à une ligne téléphonique L et, d'une part, à un synthétiseur vocal (27) prévu pour émettre au moins un message vocal explicite à destination du terminal d'abonné (30), ledit message indiquant à l'utilisateur du terminal d'abonné (30) la température ambiante du moment et/ou au moins un paramètre de fonctionnement, et, d'autre part, à un décodeur (26) prévu pour recevoir les signaux émis sur la ligne téléphonique par un terminal (30) puis les décoder, lesdits signaux émis correspondant à au moins une nouvelle valeur de paramètre de fonctionnement à prendre en compte par ladite installation.

2. Installation de commande d'une unité de chauffage selon la revendication 1, **caractérisée en ce que** ladite nouvelle valeur de paramètre de fonctionnement transmise par l'utilisateur est stockée dans des moyens de paramétrage (23) que comporte ladite unité de commande (20, 20a).

3. Installation de commande d'une unité de chauffage selon la revendication 2, **caractérisée en ce que** l'interface (25), le décodeur (26) et le synthétiseur vocal (27) sont inclus dans une même unité d'interfaçage (20b), l'unité de commande (20a) et l'unité d'interfaçage (20b) communiquant entre elles aux moyens d'émetteurs-récepteurs (28, 29) qu'elles comportent respectivement.

4. Installation de commande d'une unité de chauffage selon la revendication 1, **caractérisée en ce que** ladite nouvelle valeur de paramètre de fonctionnement transmise par l'utilisateur est la température de consigne du moment et est transmise au moyen d'un émetteur (28) au récepteur (11) de la chaudière (10) qui la prend alors en tant que valeur de consigne pour son fonctionnement.

5. Installation de commande d'une unité de chauffage selon la revendication 4, **caractérisée en ce que** l'interface (25), le décodeur (26), le synthétiseur vocal (27) et l'émetteur (28) sont inclus dans une même unité d'interfaçage (20b).

6. Installation de commande d'une unité de chauffage selon une des revendications précédentes, **caractérisée en ce que** l'interface (25) met en oeuvre un protocole de prise de la ligne L consistant à ne prendre la ligne que lorsque, sur la ligne téléphonique L, un signal de sonnerie apparaît plus d'un nombre prédéterminé de fois.

7. Installation de commande d'une unité de chauffage selon une des revendications 1 à 5, **caractérisée en ce que** l'interface (25) met en oeuvre un protocole de prise de la ligne L consistant à ne prendre la ligne que lorsque le signal de sonnerie est d'abord reçu un nombre prédéterminé de fois puis, après un laps de temps, de nouveau un nombre prédéterminé de fois.

8. Installation de commande d'une unité de chauffage selon la revendication 6, **caractérisée en ce qu'**elle met en oeuvre un protocole d'identification de l'utilisateur appelant, ledit protocole consistant à commander le synthétiseur vocal (27) de manière qu'il émette un premier message qui sera transmis au terminal d'abonné (30) de l'utilisateur appelant, ledit premier message demande à l'utilisateur d'introduire à l'aide du clavier de son terminal d'abonné (30) un code utilisateur CU, et à valider le code entré par l'utilisateur uniquement s'il est valide sinon à raccrocher la ligne.
